# EUROPEAN PATENT APPLICATION

(11) **EP 3 486 069 A1**
(43) Date of publication of application: **22.05.2019**
(21) Application number: 17202798.9
(22) Date of filing: 21.11.2017
(51) Int. Cl.: B29C 64/209, B29C 64/118, B33Y 10/00, B33Y 30/00

(54) **EXTRUSION NOZZLE FOR THREE-DIMENSIONAL PRINTING**

(71) Applicant: Siemens Aktiengesellschaft, 80333 München (DE)
(72) Inventor: Ceriani, Nicola Maria, 91052 Erlangen (DE)

(57) **Abstract**

What is proposed is an extrusion nozzle (3), a printing system (1') and a method for a material extrusion three-dimensional printing system (1'). The printing system (1') comprises an extrusion nozzle (3), a material supply system (2) providing melted material (7) and forwarding it to the extrusion nozzle (3), and a build plate (8, 8a, 8b) for depositing the melted material (7) on. The printing system (1') is characterized in that the extrusion nozzle (3) and the build plate (8, 8a, 8b) are rotatable against each other.

## Description

The present disclosure is directed to an extrusion nozzle for a material extrusion three-dimensional printer according to claim 1. Furthermore, the present disclosure is directed to a printing system for three-dimensional printing according to claim 4 and a method of creating layers by using a printing system according to claim 8.

A material part created by means of a material extrusion three-dimensional printer is characterized by a strong anisotropy of its mechanical properties. E.g. a tensile strength of the material part is lower along a direction of part construction that is along a direction perpendicular to part layers.

The printed part is created by depositing layers of melted material one on top of the other. Therefore, an adhesion between the layers usually constitutes a weakness of the part structure. In order to increase the adhesion between the layers typical solutions in the state of the art include using special materials or tuning process parameters of the three-dimensional printer.

Extruders being state of the art have round shaped orifices and therefore produce a cylinder shaped extrusion that creates flat junction surfaces between the layers of the printed part. Such a shape of junction surfaces does not facilitate a strong adhesion between the layers.

A three-dimensional printing system is disclosed in EP 3 141 376 A1. The printing system includes a reservoir unit 21 (reservoir), a recoater unit, and an ejection head unit (solidifier). The ejection head can move three-dimensionally in order to deposit melted material on a build plate.

EP 2 889 125 A1 discloses a three-dimensional printer, comprising at least one print head and a stage on which chemical ink ejected from at least one print head is stacked.

An objective of the present invention is to increase adhesion strength between adjacent layers in parts printed by a material extrusion three-dimensional printer.

The problem is solved by an extrusion nozzle for a material extrusion three-dimensional printer with an orifice for extruding melted material, which orifice has one first outer edge and one second outer edge, the first outer edge being arranged in a region opposite of the second outer edge, according to claim 1. Furthermore, the problem is solved by a printing system for three-dimensional printing according to claim 4 and by a method of creating layers by using a printing system according to claim 8. Advantageous aspects of the invention are the subject of the dependent claims.

According to the invention, the first outer edge of the orifice of the extrusion nozzle is shaped in such a way that it is able to form a tight fit with the second outer edge of the orifice of the extrusion nozzle. In other words, the orifice presents on two opposed sides complementary shapes.

Modelling the outer edge of the orifice of the extrusion nozzle, more precisely a cross-sectional shape of the orifice of the extrusion nozzle, in such a way provides a strengthened mutual adhesion of the single layers being deposited on the build plate by means of the extrusion nozzle. The uneven shape of the surfaces of the adjacent layers of the printed parts strengthens their adhesion since it provides an enlarged contact area compared to the flat surfaces made by extrusion nozzles being state of the art. Furthermore, an interlocking mechanism between these layers is facilitated, improving the overall mechanical properties of the printed parts.

In a preferred embodiment of the invention, the first outer edge and/or the second outer edge of the orifice have corrugated shapes. The corrugated shapes can comprise one or several wave crests or wave troughs. The more wave crests/troughs the corrugated shapes comprise, the stronger is the adhesion between the single layers of the printed parts.

According to a further preferred embodiment of the invention, a cross-section of the orifice is symmetrical in relation to at least one center axis of the orifice of the extrusion nozzle.

The problem is also solved by a printing system for three-dimensional printing, comprising an extrusion nozzle according to the invention, a material supply system providing melted material and forwarding it to the extrusion nozzle, and a build plate for depositing the melted material on, wherein the extrusion nozzle and the build plate are rotatable against each other.

State of the art extrusion nozzles orifices are circular and therefore rotationally symmetrical with respect to their center. Therefore, in general, no rotation of the extrusion nozzle is necessary during a three-dimensional printing process. When using non circular orifices according to the invention, as described above, an orientation of the extrusion nozzle with respect to a trajectory of the material deposition on the build plate determines the geometry of the extruded material and how this material is deposited on the build plate, more precisely on the layers having already been deposited to form the printed part.

In order to obtain the desired geometry of the extruded material and the printed part, it is necessary to maintain a predetermined orientation of the extrusion nozzle, more precisely the orifice of the extrusion nozzle. In case the cross-section of the orifice is symmetrical in relation to at least one center axis of the orifice, this center axis of the orifice of the extrusion nozzle has to be maintained parallel to the tangent of the deposition trajectory.

In order to solve this problem, the extrusion nozzle and the build plate are rotatable against each other.

In an embodiment of the printing system according to the invention the build plate is connected with a rotation drive for setting the build plate in rotation while the melted material is deposited on. By means of the rotation drive a relative orientation between the extrusion nozzle and the printed part can be successfully controlled. In order to have an automatable control of the relative orientation it is advantageous if the rotation drive is connected with a controller for receiving control signals.

In an alternative embodiment of the printing system according to the invention the extrusion nozzle is connected with a rotation drive for setting the extrusion nozzle in rotation while the melted material is deposited. Such a configuration is particularly advantageous since an actuator performing the rotation of the extrusion nozzle has to move a relative small mass (only the extrusion nozzle), wherefore the actuator does not need to be high-performance. Corresponding to the embodiment of the printing system described in the preceding section, it is advantageous if the rotation drive is connected with a controller for receiving control signals.

The problem is also solved by a method of creating layers by using a printing system according to the invention, the method comprising:
a) Melted material is deposited on a build plate by means of the material supply system and the extrusion nozzle according to a predetermined depositing trajectory. The depositing trajectory can be calculated by a control system, being part of the three-dimensional printing system or being an external device which transmits control signals to the three-dimensional printing system. Every material suitable for three-dimensional printing can be used, especially materials providing a strong adhesion between the printed layers.
b) The orientation of the extrusion nozzle and the build plate against each other is varied in order to adjust an orientation of the extrusion nozzle in relation to the predetermined depositing trajectory. In order to compute a setpoint for the orientation of the extrusion nozzle, a line tangent to the printing trajectory can be calculated. Thereby, the orientation of the extrusion nozzle is varied according to the calculated printing trajectory.

In case the build plate of the printing system is connected with a rotation drive, the orientation of the extrusion nozzle and the build plate against each other is varied by means of this rotation drive.

In case the extrusion nozzle is connected with a rotation drive, the orientation of the extrusion nozzle and the build plate against each other is varied by means of this rotation drive.

In both cases, it is advantageous to use an actuator and control system to bring either the build plate or the extrusion nozzle controllably into rotation. The actuator and control system is used for maintaining the correct alignment of the extrusion nozzle in relation to the build plate, more precisely the part printed on the build plate.

Features of examples of the present disclosure will become apparent by reference to the following detailed description of the drawings. For the sake of brevity, reference numerals or features having a previously described function may or may not be described in connection with other drawings in which they appear.
- FIG 1: is a schematic diagram illustrating a state of the art three-dimensional printing system;
- FIG 2: illustrates a deposition of a melted material for three-dimensional printing of a part according to the state of the art;
- FIG 3: illustrates a deposition of a melted material for three-dimensional printing of a part according to the state of the art in a different view;
- FIG 4: illustrates a deposition of a melted material for three-dimensional printing of a part according to the invention;
- FIG 5: illustrates one first exemplary shape of the orifice of the extrusion nozzle according to the invention;
- FIG 6: illustrates one second exemplary shape of the orifice of the extrusion nozzle according to the invention;
- FIG 7: illustrates one third exemplary shape of the orifice of the extrusion nozzle according to the invention;
- FIG 8: is a schematic diagram illustrating a three-dimensional printing system according to the present invention;
- FIG 9: illustrates one aspect of the three-dimensional printing system according to FIG 8;
- FIG 10: illustrates an adjusting of an orientation of the extrusion nozzle in relation to a trajectory of the deposition of melted material;
- FIG 11: illustrates the trajectory of the deposition of melted material according to FIG 10; and
- FIG 12: is a flow diagram illustrating a dependency between the trajectory of material deposition and an orientation of the extrusion nozzle.

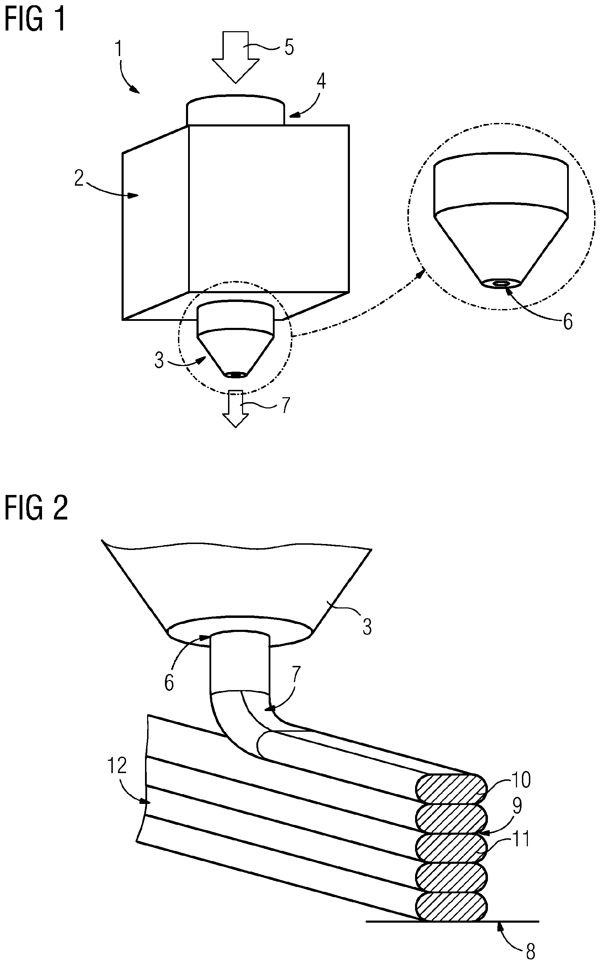

In FIG 1 there is depicted a general scheme of a three-dimensional printing system 1. The system 1 comprises a material supply system 2, in other words a melting and extruding unit 2, and an extrusion nozzle 3. The melting and extruding unit 2 comprises a material inlet 4, through which raw material 5 can be put into the melting and extruding unit 2. Without limiting, raw material 5 can be in the form of filament or pellets.

The melting and extruding unit 2 is designed for melting the raw material 5 and forwarding it to the extrusion nozzle 3. The extrusion nozzle 3 comprises an orifice 6, out of which melted material 7 can be pushed in order to be deposited on a build plate to form a three-dimensional printed part (not shown). As can be seen in the enlarged illustration of the extrusion nozzle in the right part of FIG 1, the orifice 6 of the extrusion nozzle 3 is circular-shaped.

The melted material 7 being pushed through the circular-shaped orifice 6 of the extrusion nozzle 3 is deposited with a cylindrical shape on a build plate 8, what is illustrated in FIG 2. As can be noticed, the deposited material forms flat surfaces 9, which constitute a connection of adjacent layers 10, 11 of the printed part 12. Such a configuration of the layers 10, 11 generates only a small contact surface 9 between the layers 10, 11. As a result, strength of the connection between the layers 10, 11 is relatively small. Moreover, flat surfaces 9 impede interlocking mechanisms between the single layers 10, 11.

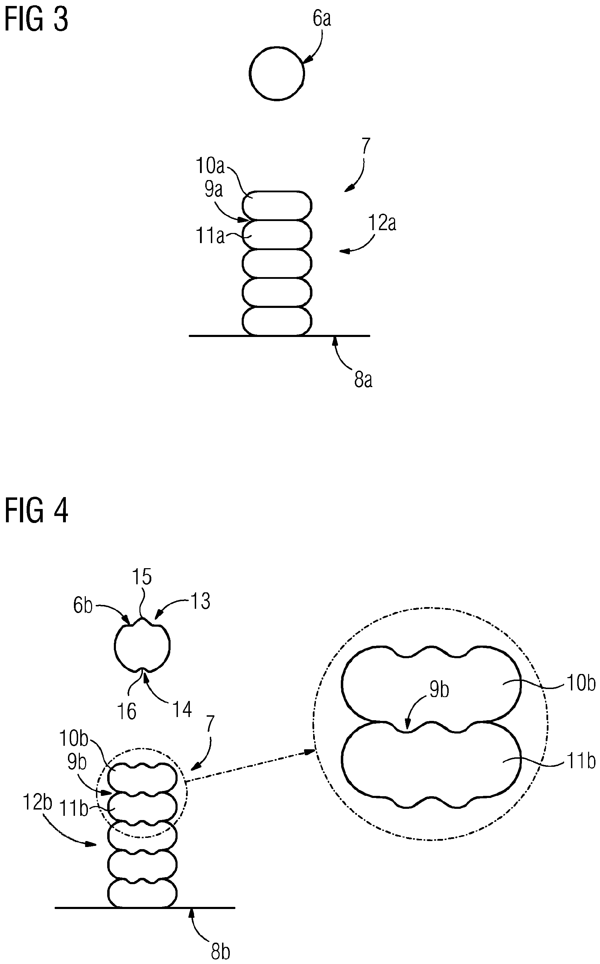

Figures 3 and 4 illustrate a comparison between layers 10a, 11a deposited by an extrusion nozzle 3 being state of the art (FIG 3) and layers 10b, 11b deposited by an extrusion nozzle 3 according to the present invention (FIG 4).

As described above, the orifice 6a of an extrusion nozzle 3 being state of the art is circular-shaped. Melted material 7 being pushed through the circular-shaped orifice 6a of the extrusion nozzle 3 is deposited with a cylindrical shape on a build plate 8a.

The orifice 6b of an extrusion nozzle 3 according to the present invention is not circular-shaped. A first outer edge 13 of the orifice 6b and a second outer edge 14 of the orifice 6b have corrugated shapes, both outer edges 13, 14 being arranged on opposing sides of the orifice 6b. The first outer edge 13 comprises one wave crest 15, while the second outer edge 14 comprises one wave trough 16. Wave crest 15 and wave trough 16 are designed for forming a tight fit.

As can be seen in FIG 4, the part 12b being printed by means of an extrusion nozzle 3 according to the invention has an increased mutual adhesion of its single layers 10b, 11b due to the tight fit of the corrugated shape of the melted material 7, pushed through the orifice 6b according to the present invention.

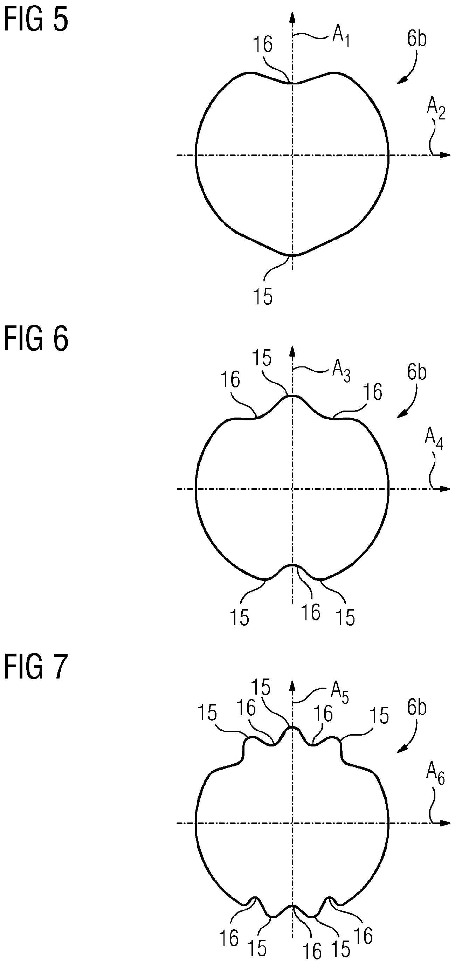

Further possible implementations of the proposed new type of extrusion orifice 6b are illustrated in Figures 5 through 7. The more waves crests 15/troughs 16 the corrugated shape of the orifice 6 comprises, the stronger is the adhesion between the single layers 10b, 11b of the printed part 12b. All exemplary orifices 6 in FIGs 5 through 7 are symmetrical in relation to one center (vertical) axis A₁, A₃, A₅ of the orifice, respectively. There is no symmetry in relation to the horizontal axis A₂, A₄, A₆ due to the complementary shapes of the orifices 6.

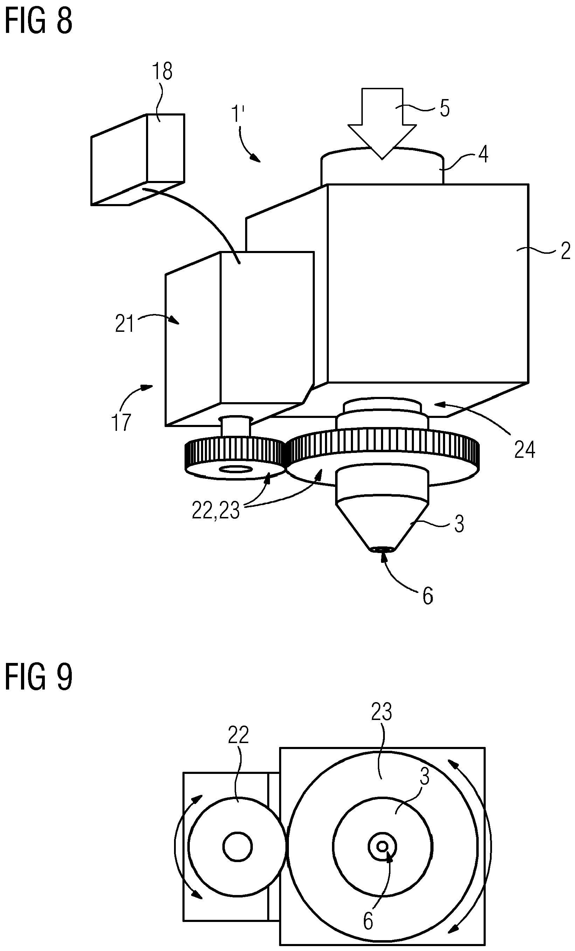

FIG 8 shows a three-dimensional printing system 1' according to the present invention. The system 1' comprises a material supply system 2, an extrusion nozzle 3, a rotation drive 17 and a controller 18.

The material supply system 2 is designed for melting and extruding raw material 5 which is put into the material supply system 2 via a material inlet 4. Without limiting, raw material 5 can be in the form of filament or pellets. The material supply system 2 is also designed for forwarding melted material 7 to the extrusion nozzle 3.

The extrusion nozzle 3 comprises an orifice 6, out of which melted material 7 can be pushed in order to be deposited on a build plate 8 to form a three-dimensional printed part (not shown).

The rotation drive 17 comprises a motor 21 and two gearwheels 22, 23. The motor 21 is connected with the controller 18 which transmits control signals 19 to the motor 21 which brings the extrusion nozzle 3 into rotation by means of the gearwheels 22, 23. Extrusion nozzle 3 itself is mounted on a rotational joint 24, e.g. through a bearing, bushing or similar, allowing a rotation of the extrusion nozzle 3 in relation to the build plate 8 (cf. FIG 9).

The controller 18 transmits controls signals 19 to the motor 21 of the rotation drive 17 in order to maintain a correct alignment of the extrusion nozzle 3 in relation to a deposition trajectory 20.

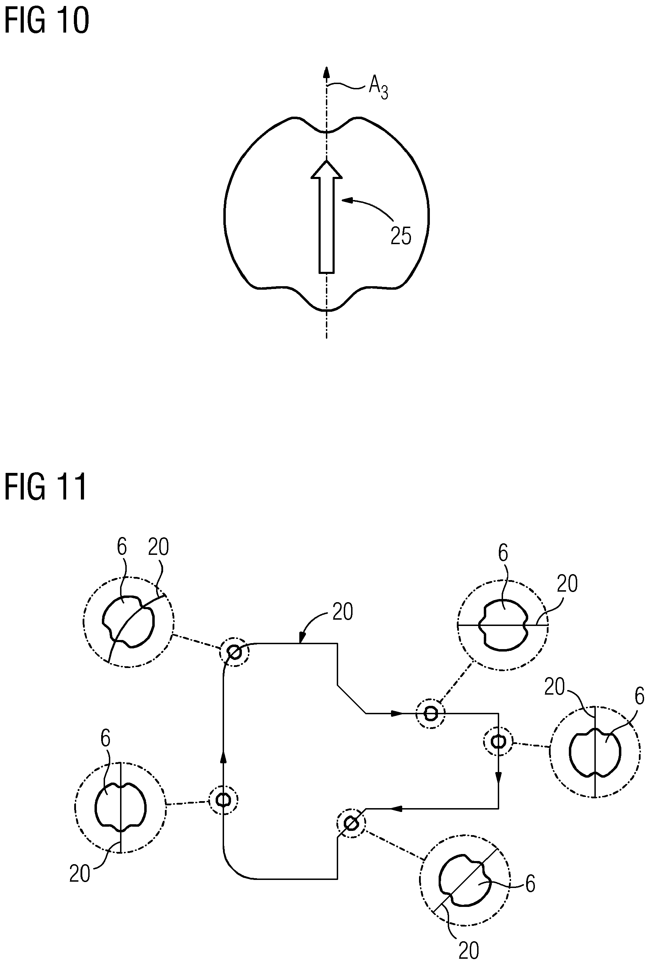

FIG 11 shows an exemplary trajectory 20 which is known to the controller 18. For example, the controller 18 gets the necessary information about the trajectory 20 from a printer controller (not shown) of the three-dimensional printing system 1'. It is also possible that both of these controllers are designed as one single controller, performing both control tasks with respect to the rotation drive 17 and the printing system 1'.

After having received the necessary information about the trajectory 20 controller 18 computes a correct orientation of the extrusion nozzle 3. In order to compute the setpoint of the orientation of the extrusion nozzle 3, the controller 18 has to calculate a line tangent 25 to the printing trajectory 20. The line tangent 25 can be aligned with a center axis A₃ of the extrusion nozzle 3, as shown in FIG 10. Other alignments may also be possible.

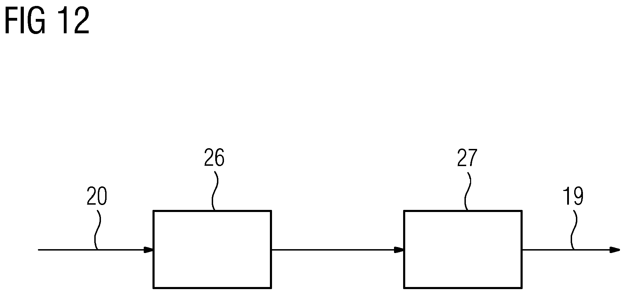

FIG 12 shows a flow diagram of this process. After having received the printing trajectory 20, the controller 18 is performing a nozzle orientation computing 26. In a nozzle actuator computing step 27 the calculated correct setpoint of the extrusion nozzle 3 is translated by the controller 18 into control signals 19 which are forwarded to the motor 21.

While several examples have been described in detail, it is to be understood that the disclosed examples may be modified. Therefore, the foregoing description is to be considered non-limiting.

## Claims

1. Extrusion nozzle (3) for a material extrusion three-dimensional printer (1) with an orifice (6) for extruding melted material (7), which orifice (6) has one first outer edge (13) and one second outer edge (14), the first outer edge (13) being arranged in a region opposite of the second outer edge (14),
**characterized in that**
the first outer edge (13) of the orifice (6) of the extrusion nozzle (3) is shaped in such a way that it is able to form a tight fit with the second outer edge (14) of the orifice (6) of the extrusion nozzle (3).

2. Extrusion nozzle (3) according to claim 1, wherein the first outer edge (13) and/or the second outer edge (14) of the orifice have corrugated shapes (15, 16).

3. Extrusion nozzle (3) according to claims 1 or 2, wherein a cross-section of the orifice (6) is symmetrical in relation to at least one center axis (A₁, A₂, A₃, A₄, A₅, A₆) of the orifice (6).

4. Printing system (1') for three-dimensional printing, comprising an extrusion nozzle (3) according to one of claims 1 through 3, a material supply system (2) providing melted material (7) and forwarding it to the extrusion nozzle (3), and a build plate (8, 8a, 8b) for depositing the melted material (7) on, wherein the extrusion nozzle (3) and the build plate (8, 8a, 8b) are rotatable against each other.

5. Printing system (1') according to claim 4, wherein the build plate (8, 8a, 8b) is connected with a rotation drive (17) for setting the build plate (8, 8a, 8b) in rotation while the melted material (7) is deposited on.

6. Printing system (1') according to claim 4, wherein the extrusion nozzle (3) is connected with a rotation drive (17) for setting the extrusion nozzle (3) in rotation while the melted material (7) is deposited.

7. Printing system (1') according to claims 5 or 6, wherein the rotation drive (17) is connected with a controller (18) for receiving control signals (19).

8. Method of creating layers (10, 10a, 10b, 11, 11a, 11b) by using a printing system (1') according to one of claims 4 through 7, comprising:
a) Depositing melted material (7) on a build plate (8, 8a, 8b) by means of the material supply system (2) and the extrusion nozzle (3) according to a predetermined depositing trajectory (20);
b) Varying an orientation of the extrusion nozzle (3) and the build plate (8, 8a, 8b) against each other in order to adjust an orientation of the extrusion nozzle (3) in relation to the predetermined depositing trajectory (20).

9. Method according to claim 8 using a printing system (1') according to claim 5, wherein the orientation of the extrusion nozzle (3) and the build plate (8, 8a, 8b) against each other is varied by means of the rotation drive (17) being connected with the build plate (8, 8a, 8b).

10. Method according to claim 8 using a printing system (1') according to claim 6, wherein the orientation of the extrusion nozzle (3) and the build plate (8, 8a, 8b) against each other is varied by means of the rotation drive (17) being connected with the extrusion nozzle (3).
